# EUROPEAN PATENT APPLICATION

(11) **EP 0 579 103 A2**
(43) Date of publication of application: **19.01.1994**
(21) Application number: 93110873.2
(22) Date of filing: 07.07.1993
(51) Int. Cl.: B01D 25/12

(54) **Stabilizing structure for use with a filter press plate**

(30) Priority: 08.07.1992 US 910201
(71) Applicant: BAKER-HUGHES INCORPORATED, Houston Texas 77210-4740 (US)
(72) Inventor: Davis, Steven S., Farmington, Utah 84025 (US)
(74) Representative: Grünecker, Kinkeldey, Stockmair & Schwanhäusser Anwaltssozietät

(57) **Abstract**

In a filter plate for use in a filter press assembly, stabilizing structure is provided for placement about the feed port of the filter plate to stabilize the filter plate in the area of the feed port during operation, and to prevent deformation thereof due to pressure differentials. The stabilizing structure includes an annular collar sized to encircle the feed port, a plurality of bosses associated with the annular collar and channels formed in association with the annular collar to facilitate movement of fluid into the chambers formed between adjacent, stacked filter plates.

## Description

### BACKGROUND

Field of the Invention: This invention relates to filter press apparatus for removing fluid filtrate from a slurry to produce a cake of solid material. Specifically, this invention relates to means for providing stability to the filter plate portion of the apparatus in the area of the inlet or feed port where deformation of the plate typically occurs, compromising the operation of the apparatus.

Statement of the Art: Filter presses are commonly used in various industries to treat slurries and the like to remove the fluid component of the slurry, thereby producing a thickened cake from the solids component of the slurry. Filter presses are typically used in pulp recovery, waste water treatment and similar applications requiring liquid-solid separation.

A filter press typically comprises a plurality of filter plates which are stacked adjacent to each other when in operation. A conventional filter plate has opposing surfaces, and projections (usually termed "pips") formed along the plane of each surface to provide channels therebetween for movement of fluid. Some filter plates are formed without pips. The filter plate has at least one aperture formed therethrough which serves as an inlet port for slurry. The inlet port may be located in the center of the plate, or may be located eccentrically, such as in any quadrant of the plate. Apertures are formed, usually in the corners of the filter plate, to provide an outlet for fluid filtered from the slurry.

A resilient membrane may be positioned on either or both of the surfaces of the filter plate. When a membrane is used with the filter plate, the structure is known as a membrane filter. When no membrane is used over the plate, the structure is known as a recess plate. The resilient membrane is configured with pips to provide movement of fluid through the channels formed between the pips. A filter plate may be configured with a frame peripherally positioned about the plate, and the membrane may be integrally formed with the filter plate and frame.

Porous media, typically a woven material, is positioned around the plate and over drainage areas (pips and ribs). In operation, a plurality of media-covered filter plates are positioned adjacent to each other with the frames contacting each other. A seal is formed around the periphery of the filter plates when pressure is applied to the entire stack of plates. The plates are arranged such that the frames of each plate are aligned, and all inlet and outlet ports formed in the plates are aligned. Chambers are formed between the adjacent plates in the area between the peripheral frame and the inlet port.

Slurry is introduced into the inlet port, and the slurry moves through the course formed by the aligned inlet ports of each plate. The slurry enters into the chambers formed between the plates. The fluid component of the slurry filters through the porous media and the fluid moves along the surface of the plate, or along the resilient membrane in a membrane filter, to the outlet port. The solid component of the slurry is maintained within the chamber between the interfacing media. A cake of material is formed from the solid component by compression of the chamber. Compression is accomplished by injection of a fluid into the space formed between the filter plate surface and the membrane.

Filter plates can be subjected to elevated temperatures and pressures during operation. As a result, the plates may warp or bend causing a number of system failures, including occlusion of some of the chambers. In an attempt to alleviate plate deformation, filter plates have been constructed with enlarged projections or bosses which extend outwardly from the surfaces of the plate. The bosses are sized in height, relative to the plane of the frame, so that the bosses on adjacent filter plates come into proximity with each other when the plates are stacked adjacently. Thus, when filter plates begin to warp, the abutment of aligned bosses limits or prevents distortion of the filter plates.

Prior art filter plates using bosses formed on the surface of the filter plate present certain disadvantages to operation of filter press apparatus. Specifically, bosses formed in the area of the plate between the inlet port and the outer edge or frame project into the interior of the chamber formed between the plates. Washing and compression of the solids component is made difficult because the bosses obstruct the chamber. Further, although placement of bosses along the surface of the plate aids in preventing distortion, the point of greatest deformation resides in the area of the inlet port.

Thus, it would be advantageous to the operation of a filter press to provide structure in the area of the inlet port to stabilize and limit movement of the filter plate under high temperature and pressure conditions, particularly when pressure differentials occur between adjacent chambers. Further, it would be advantageous to configure such structure to provide channels through which slurry may gain entry into the chambers formed between the plates.

### SUMMARY OF THE INVENTION

According to the present invention, stabilizing structure is provided proximate the feed inlet, or port, of a filter plate for stabilizing the filter plate in the area of the feed inlet to limit or prevent deformation of the filter plate during operation of the press. The stabilizing structure also provides means for facilitating movement of slurry into the chambers formed between stacked filter plates, and particularly allows the placement of the porous media over the stabilizing structure.

The stabilizing structure of the present invention includes an annular collar which is placed in proximity to the feed inlet of a filter plate and surrounds the inlet. An annular collar surrounds the inlet on either side of the filter plate. The annular collar is positioned against the surface of the filter plate and holds the membrane against the surface of the filter plate when a membrane is used.

The annular collar is formed with projections, or bosses, extending upwardly from the upper surface of the annular collar. The bosses are spaced about the annulus of the annular collar to provide passageways or channels between the bosses. The height of the bosses, as measured from the upper surface of the annular collar to the apex of the bosses, may vary. Most suitably, however, the height of the bosses is approximately in line with the plane of the frame, or seal face, of the filter plate. The height of the bosses may be from about five millimeters to about fifty millimeters. The bosses may be sized in height to be lower than the plane of the frame, but should not be shorter than eighty percent of the maximum height of the boss. Additionally, the bosses on the annular collar may vary in height such that some have less height than others.

The annular collar is attached to the filter plate by securement means such as bolts, screws or the like. The annular collars are attached to the filter plates so that the bosses of a first annular collar are aligned with the bosses of an adjacent annular collar attached to an adjacent filter plate. Thus, when the filter plates are stacked together, the apices of the bosses on adjacent annular collars are in close proximity to each other or are in contact with each other. Passageways, or channels, are formed between the bosses to provide movement of slurry into the chambers formed between the filter plates.

The bosses of the stabilizing structure provide aligned, abutting surfaces so that little or no deformation of the filter plate can occur in the area of the feed inlet. The stabilizing structure of the present invention allows the use of non-metal materials to form the structure since the bosses provide strength in the area of the feed inlet which is typically achievable only with metal materials. Accordingly, the stabilizing structure may be formed of any thermosetting plastic or hard polymer material.

The stabilizing structure of the present invention may be used with a conventional filter plate having bosses formed on the surface of the plate; however, the stabilizing structure provides sufficient strength to the plates so that bosses on the filter plate surface may not be necessary. The stabilizing structure may be used in association with recess plates or membrane filter plates, and may be used in assemblies where recess plates and membrane plates are employed in an alternating configuration.

The stabilizing structure of the invention may comprise a separable annular collar attachable to the filter plate. Alternatively, the stabilizing structure may be integrally formed as part of the filter plate structure by means such as molding.

### BRIEF DESCRIPTION OF THE ILLUSTRATED EMBODIMENTS

In the drawings, which illustrate what is currently regarded as the best mode for carrying out the invention,
FIG. 1 is an elevational view illustrating a filter plate having the stabilizing structure of the invention surrounding the feed inlet;
FIG. 2 is an elevational view of the stabilizing structure;
FIG. 3 is a view in cross section of the stabilizing structure shown in FIG. 2, taken at line 3-3;
FIG. 4 is a view in cross section of two membrane filter plates stacked adjacent each other as configured during operation of a filter press;
FIG. 5 is a view in cross section of a portion of two adjacent stabilizing structures; and

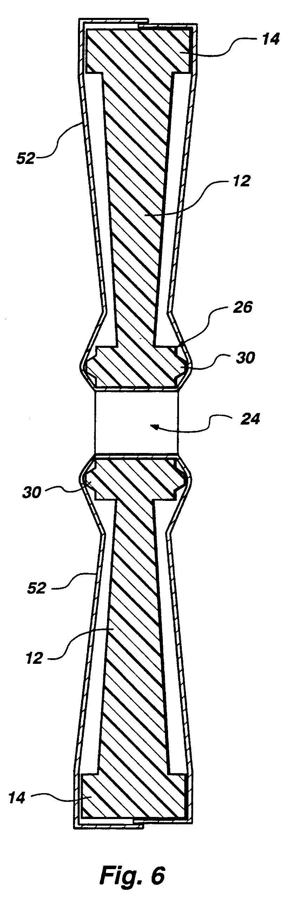

FIG. 6 is a view in cross section of a filter plate illustrating integral formation of the stabilizing structure and body plate.

### DETAILED DESCRIPTION OF THE ILLUSTRATED EMBODIMENTS

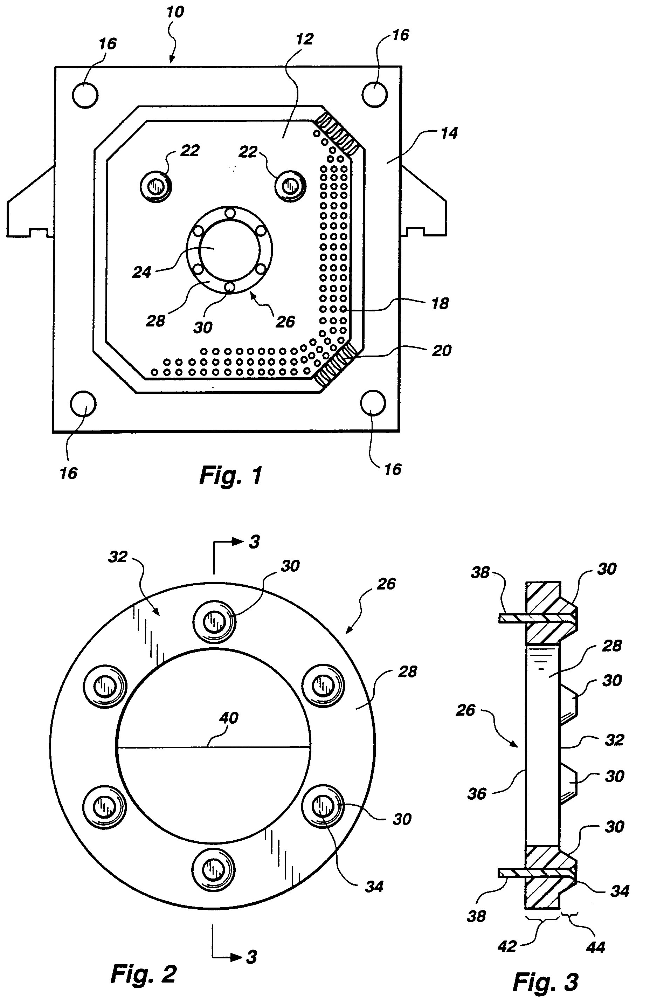

FIG. 1 illustrates a conventional filter plate 10 which comprises a planar body plate 12, also known and referred to herein as a "web." The web 12 is surrounded by a frame 14 which is most commonly integrally formed with the web 12. Apertures 16 are formed in the frame 14 to provide an outlet for passage of filtered fluid therethrough. The web 12 is typically formed with small projections, called pips 18, covering substantially the surface of the web. A representative number of pips 18 are shown in FIG. 1. Channels are formed between the pips 18 which direct filtered fluid away from the web 12 and toward drainage conduits 20 formed along the periphery of the web 12. Bosses 22 may be formed in the area of the web 12 to aid in stabilizing the web 12. However, such bosses 30 may be eliminated.

An inlet or feed port 24 is formed through the web 12 to provide communication of slurry into the filter press assembly. Although the feed port 24 is shown in FIG. 1 to be centrally located, the feed port 24 may be located anywhere in the area of the web 12. The stabilizing structure 26 of the invention is shown encircling the feed port 24 in FIG. 1. The stabilizing structure is comprised of an annular collar 28 and projections or bosses 30 extending upwardly from the annular collar 28. Alternatively, the stabilizing structure 26 may be integrally formed with the web 12 by, for example, a unitary molding process.

As illustrated more clearly in FIGS. 2 and 3, the stabilizing structure 26 comprises an annular collar 28 which surrounds the feed port of the filter plate. A plurality of bosses 30 project upwardly from the top surface 32 of the annular collar 28. Each boss 30 is structured with an upper surface 34 which comes into proximity with a co-aligned boss of an adjacent stabilizing structure, as explained further hereinafter. A suitable configuration for the bosses 30 is a frustoconical shape, as shown in FIG. 3, although other shapes or configurations may be employed.

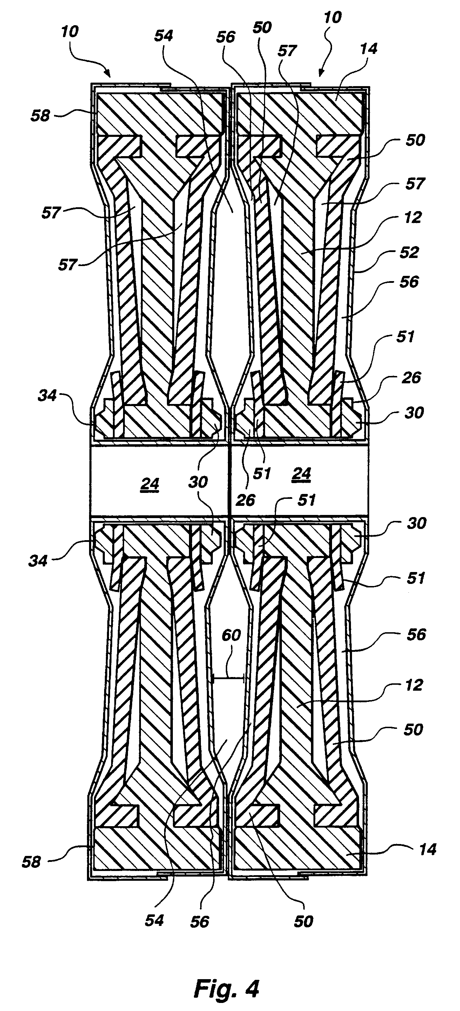

The stabilizing structure 26 is attached to the web 12 of the filter plate 10 by positioning the bottom surface 36 of the annular collar 28 against the web 12, as shown in FIG. 1, or against the membrane, as shown in FIG. 4. The stabilizing structure 26 is secured to the web 12 by securement means, such as tap screws 38 as shown in FIG. 3. Screws 38 may be positioned through the center of the bosses 30, as shown in FIG. 3, or screws may be positioned about the annulus of the annular collar 28.

The annular collar 28 is sized to encircle the feed port 24 of a filter plate 10. Therefore, the internal diameter 40 of the annular collar 28 is dictated by the size of filter plate being used. The internal diameter may range from about 50 millimeters to about 250 millimeters or more. The height 42 of the annular collar 28, as measured between the bottom surface 36 and the top surface 32 of the collar 28, may range from approximately equal to the height 44 of the boss 30 to about one half the height of the boss 30, as measured between the top surface 32 of the annular collar 28 and the upper surface 34 of the boss 30. It is only important that the upper surface 34 of the boss does not exceed the plane of the seal face of the frame 14, as may be more readily seen in FIG. 4.

FIG. 4 illustrates in cross section two adjacent membrane filter plates 10 aligned as part of a filter assembly. A typical filter assembly may be comprised of as many as twenty or more filter plates stacked as shown in FIG. 4. It may be seen in cross section that the web 12 is formed integrally with the frame 14 of the filter plate 10. A membrane 50 is shown attached to the filter plate 10 on either side of the web 12. The membrane 50 is made of a resilient material to facilitate flexible movement of the membrane 50. As configured, the filter plates shown by FIG. 4 are membrane plates. A membrane support 51 encircles the feed port 24 on either side of the filter plate 10. The membrane support 51 is positioned between the membrane 50 and the stabilizing structure 26 of the invention.

Each filter plate 10 is covered by porous media 52 which encloses the filter plate 10 while leaving the feed port 24 open for movement of slurry through the aligned feed ports of the stacked filter plates. A chamber 54 is formed between adjacent plates into which slurry moves. As slurry enters the chamber 54, fluid is filtered through the porous media 52 into a space 56 formed between the porous media 52 and the membrane 50 (or between the porous media 52 and the web 12 when a recess filter is employed). Fluid filtrate is communicated away from the membrane between pips (not shown) formed on the surface of the membrane 50, and then through conduits (not shown) which direct the fluid away from the filter plate 10.

The solid component of the slurry remains in the chamber 54 as the filtrate is drawn off. A cake of solid material is formed by introduction of a fluid expansion media, such as gas or liquid, into the space 57 formed between the web 12 and the membrane 50. The membrane support 51 facilitates closure of the chamber 54 near the stabilizing structure 26 so that solid material is not forced back into the feed port 24.

As illustrated by FIG. 4, the upper surface 34 of the bosses 30 of the stabilizing structure 26 may be in approximate line with the seal face 58 of the frame 14. Thus, when a plurality of filter plates 10 are stacked adjacent each other, the bosses 30 of one stabilizing structure 26 come into close proximity to aligned bosses 30 of the adjacent stabilizing structure 26. The bosses 30 may be shorter in height than the plane of the seal face 58. It is only important that the upper surfaces 34 of adjacent, aligned bosses 30 be sufficiently close to prevent excessive deformation of the filter plates 10 during operation.

The height of the bosses 30, as measured from the top surface 32 of the annular collar 28 to the upper surface 34 of the bosses, is dependent upon the size of filter plate 10 used. The size of the filter plate 10 is, in turn, determined by the chamber capacity and desired size of cake. Cake sizes may range from about 10 millimeters to about 100 millimeters in thickness, with a preferred range of about 25 millimeters to about 50 millimeters. Therefore, the internal depth 60 of the chamber 54, as measured between adjacent membranes 50, may range from about 10 millimeters to about 100 millimeters. The height of the bosses 30 may, therefore, be from about 5 millimeter to about 50 millimeters.

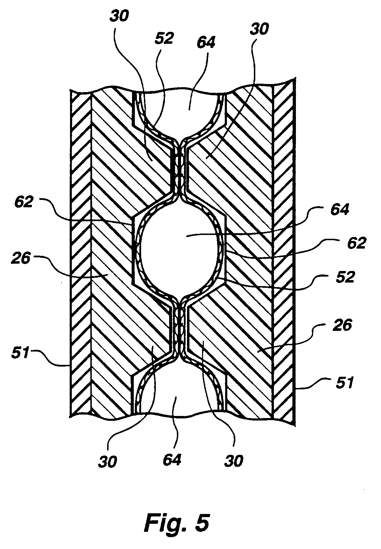

As more clearly illustrated by FIG. 5, when the filter plates are stacked adjacent each other, the bosses 30 of adjacent stabilizing structures 26 are aligned. The porous media 52 enclosing the filter plates become positioned between the spaces 62 formed between the bosses 30 thereby providing channels 64 through which slurry may flow from the feed port 24 into the chambers 54.

In the operation of a filter press assembly, slurry is fed into the feed port 24 under pressure. The temperature of the slurry may be elevated. Under typical operating conditions, pressure differentials are formed in various areas of the filter press assembly. With the development of pressure differentials, the web 12 of the filter plate begins to deform. As a result of deformation of the webs 12, in addition to other operating conditions which are not completely understood, some of the chambers formed between the filter plates may close.

With prior art filter plates, bosses have been formed on the surface of the plate, as shown by FIG. 1. To some extent, such bosses are effective at reducing deformation of the webs 12. However, the initial and primary locus of deformation in the web 12 is in the area of the feed port 24. Therefore, the stabilizing structure 26 of the present invention provides bosses 30 at the primary point of deformation of the web 12. Because of the stability provided by the placement of the bosses 30, the stabilizing structure 26 may be made of non-metal materials.

The present invention may be used in many filter press assembly applications. For example, the present invention may be used in waste water systems, paper pulp recovery systems, mining and chemical operations and the like. Therefore, reference herein to specific details of the illustrated embodiments is by way of example and not by way of limitation. It will be apparent to those skilled in the art that many modifications of the basic illustrated embodiment may be made without departing from the spirit and scope of the invention as recited by the claims.

## Claims

1. Stabilizing structure for use with a filter plate having a body plate and feed port formed through said body plate, said stabilizing structure comprising:
an annular collar securable to said filter plate and sized to encircle said feed port, said annular collar having a bottom surface for positioning against said filter plate and a top surface;
a plurality of bosses formed along said top surface of said annular collar, each said boss having an upper surface; and
channel means associated with said annular collar to provide movement of slurry therethrough.

2. The stabilizing structure of Claim 1 wherein said bosses are sized in height from about five millimeters to about fifty millimeters, said height being measured from said top surface of said annular collar to said upper surface of said boss.

3. The stabilizing structure of Claim 2 wherein said annular collar is a flattened disk having an aperture formed in the center of said disk, said aperture having an internal diameter sized to encircle said feed port formed in said filter plate.

4. A filter plate for use in a filter press assembly comprising:
a body plate having opposing sides;
a frame member peripherally formed about said body plate, said frame member having a seal face;
a feed port formed through said body plate;
stabilizing structure associated with said opposing sides of said body plate, said stabilizing structure being positioned to encircle said feed port;
a plurality of bosses associated with said stabilizing structure, each said boss having an upper surface; and
channels associated with said stabilizing structure to facilitate movement of fluid therethrough.

5. The filter plate of Claim 4 wherein said bosses are between about five millimeters and about fifty millimeters in height.

6. The filter plate of Claim 5 wherein said stabilizing structure comprises an annular collar securable to said body plate and sized to encircle said feed port.

7. The filter plate of Claim 5 wherein said stabilizing structure is integrally formed with said body plate.

8. The filter plate of Claim 5 wherein said upper surface of each said boss is in planar alignment with said face seal.

9. The filter plate of Claim 4 further including a resilient membrane associated with each opposing side of said body plate, said membrane being positioned between said body plate and said stabilizing structure.

10. An axially stabilized filter press assembly comprising:
a plurality of filter plates positioned adjacent each other, each said filter plate comprising;
a body plate having opposing sides;
a frame peripherally formed about said body plate;
a feed port formed through said body plate;
outlet conduit structure associated with said frame for flow of fluid filtrate therethrough;
stabilizing structure associated with said opposing sides of said body plate and positioned to encircle said feed port, said stabilizing structure having a plurality of bosses projecting in a direction perpendicular to said body plate; and
channels formed in said stabilizing structure for facilitating movement of slurry therethrough;
a continuous feed port formed by alignment of each said feed port of said filter plates in said assembly;
porous media covering each said filter plate, said porous media being positioned over said stabilizing structure and through said feed port of each said filter plate;
a chamber formed between each said adjacent filter plates; and
compression means for compressing said chambers to form a cake of solid material therein.

11. The filter press assembly of Claim 10 wherein each said boss is formed with an upper surface, and wherein said bosses are aligned such that said upper surfaces of said bosses of adjacent stabilizing structures are in close proximity to each other.

12. The filter press assembly of Claim 11 further including a resilient membrane positioned against certain of said opposing sides of said filter plates, a portion of said resilient membrane being positioned between said stabilizing structure and said opposing surface against which said resilient membrane is positioned.
